# EUROPEAN PATENT SPECIFICATION

(11) **EP 1 008 278 B1**
(45) Date of publication and mention of the grant of the patent: **21.05.2003**
(21) Application number: 98940438.9
(22) Date of filing: 28.08.1998
(51) Int. Cl.: H05B 3/82, H05B 1/02, G01K 1/14, A47J 27/21, G05D 23/24

(54) **ELECTRICAL LIQUID HEATING APPARATUS**
ELEKTRISCHER FLUSSIGKEITSHEIZVORRICHTUNG
APPAREIL DE CHAUFFAGE DE LIQUIDES ELECTRIQUE

(30) Priority: 28.08.1997 GB 9718246
(43) Date of publication of application: 14.06.2000
(73) Proprietor: STRIX LIMITED, Ronaldsway, Isle of Man IM9 2RG (GB)
(72) Inventor: DE'ATH, Lawrence, Harrow HA1 4EB (GB); DOYLE, Keith, Barrie, Tetbury, Gloucestershire GL8 8GY (GB); COSGROVE, Paul, Bath BA1 6JL (GB)
(74) Representative: Leckey, David Herbert
(86) International application number: GB9802613
(87) International publication number: WO99012393

(56) References cited:
- EP-A- 0 672 374
- GB-A- 2 135 143
- GB-A- 2 185 161
- US-A- 4 350 870
- US-A- 4 449 035

## Description

The present invention relates to electrical liquid heating apparatus, for example liquid heating vessels, such as kettles, urns and the like and heaters, heater assemblies and controls for liquid heating vessels.

In general, it is desirable to monitor the operating temperature of a liquid heating apparatus, for example to monitor the temperature of the heater, of the heating element, of the liquid being heated and/or the temperature of some other part of the apparatus that is heated during normal or abnormal operation of the apparatus. In some cases this temperature is monitored in order to control the normal operation of the liquid heating apparatus, for example to interrupt the power supply to a heating element when the liquid reaches a desired temperature. In other cases, this temperature is monitored to prevent damage to the liquid heating apparatus in the event of abnormal operating conditions, for example to interrupt the power supply to a heating element in the event that the heating element exceeds a predetermined temperature, such as can occur when the apparatus is activated in the absence of a liquid, so-called "dry-switch on".

Most known liquid heating apparatus utilises mechanical sensors in the form of thermally sensitive bimetallic actuators to monitor the operating temperature of the apparatus.

It is also known to monitor the operation of liquid heating apparatus electronically using a thermistor as a temperature sensor. One example of this is shown in GB 2228634. However, such thermistors must be maintained in thermal contact with the region of the liquid heating apparatus the temperature of which is to be monitored and must be electrically connected to a control for the liquid heating apparatus.

GB 2269980 discloses a thick film printed heating element on which are provided temperature sensors in the form of resistive tracks. The arrangement according to this document suffers from the disadvantage that the temperature sensing tracks can only be calibrated once they have been applied to the heater substrate and are subject to a high variation in their temperature coefficient of resistance.

US A350870 discloses a heater for a photocopier in which a thermistor is mounted in an aperture in the heater. Electrical connection is made by leads which extend normal to the plane of the heater.

The present invention seeks to provide a simple arrangement of a thermistor in a liquid heating apparatus that can be used to monitor the operating temperature of the liquid heating apparatus.

The present invention provides electrical liquid heating apparatus comprising a thermistor for monitoring a temperature of the liquid heating apparatus, wherein the thermistor is mounted against and in direct thermal and electrical contact with a mounting location on a heatable portion of the apparatus.

Thus, according to the present invention a combined electrical and thermal connection is made to the thermistor at a single location which significantly increases the simplicity of the thermistor arrangement in the liquid heating apparatus and considerably eases assembly of the apparatus. Further, the mounting location becomes part of the electrical circuitry associated with the thermistor.

The mounting location may be provided at any position on or in the liquid heating apparatus which is heated directly or indirectly by a heater of the apparatus or the liquid in the apparatus. For example, the mounting location may be provided on a part of the liquid heating apparatus that, in use, is in thermal contact with, and thus heated by, the liquid to be heated such that the thermistor indirectly monitors the temperature of the liquid. Alternatively or additionally, the mounting location may be provided on a part of the liquid heating apparatus that is in thermal contact with a heater of the apparatus such that the thermistor monitors the temperature of the heater. Preferably, the mounting location is provided on a heater of the liquid heating apparatus. In a particularly preferred arrangement, the mounting location is provided in a position such that in normal operation of the heating apparatus the temperature of the mounting location is predominantly influenced by the temperature of the heated liquid, but in abnormal operation of the heating apparatus, for example during dry switch-on, the temperature of the heating element becomes the predominant influence. Such a position may be determined empirically.

In order to maintain the thermistor in good thermal and electrical contact with the mounting location, the thermistor may be electrically and thermally conductively bonded to the mounting location, for example by soldering or by using silver-loaded epoxy. In one arrangement, a region of electrically conductive, for example silver-loaded, ink is applied to the mounting location, for example by printing. The thermistor is then applied to the ink and the ink is fired so that the thermistor is bonded to the mounting location by the conductive ink. This is particularly advantageous when the mounting location is provided on a thick film printed heater as the conductive ink may be fired at the same time as the resistive heating track.

Alternatively, however, the thermistor may be resiliently biased against the mounting location by biasing means. The biasing means may be in the form of a spring, such as a coil spring or a leaf spring. A second electrical contact may be made to the thermistor by means of a soldered or similarly attached electrical connection. Preferably, however, the biasing means is electrically conductive and makes electrical contact with the thermistor. In this way, an electrical path may be formed between the biasing means and the mounting location via the thermistor. A permanent electrical and mechanical connection may be made between the biasing means and the thermistor for example by means of a solder or similar connection.

The electrical liquid heating apparatus will generally comprise electrical circuitry connected electrically to the thermistor. The circuitry may be mounted on a support with the thermistor being arranged between the support and the mounting location. In such an arrangement, the circuitry is conveniently arranged on one side of the thermistor and the mounting location is arranged on the other side thereof. Preferably, the biasing means is also arranged between the support and the mounting location. Most preferably, the support and the mounting location sandwich the biasing means therebetween.

The support preferably has an electrical contact location for engagement with the biasing means. Guide means may be provided for the biasing means and/or the thermistor, for example the thermistor or the thermistor and the biasing means may be arranged in a guide bore provided in an intermediate member arranged between the support and the mounting location. In this way it can be ensured that the biasing means is properly located with respect to the thermistor, the support and the heater. The support may have a further electrical contact location for engagement with a resilient electrical contact extending in a further guide bore provided in the intermediate member, for engagement with a further contact provided on the apparatus which is electrically connected to the mounting location for the thermistor.

Preferably, the surface of the thermistor in contact with the biasing means is metallised, so that good electrical contact is made between the thermistor and the biasing means. Advantageously, the mounting location is substantially planar and the thermistor has a substantially flat mounting face, the mounting face being mounted against said mounting location. In this way good thermal and electrical contact can be maintained between the thermistor and the mounting location. Preferably, the thermistor has a face opposed to the mounting face and substantially parallel therewith, so that this face may be effectively contacted by the biasing means. Advantageously, the surface of the thermistor in contact with the mounting location is metallised, so that good electrical and thermal contact is made therebetween.

It has been found that a particularly suitable thermistor that meets the above requirements is the so-called "pill-type" thermistor. Such thermistors take the form of a disc of material with a resistance dependent on temperature. Positive or negative temperature coefficient material may be used depending on the requirements of the electronics controlling the apparatus. These thermistors are often manufactured with the two circular faces of the thermistor metallised. The metallised surfaces of the thermistor are used in the manufacturing process to empirically calibrate the thermistor, by measuring the thermistor's resistance with temperature.

The mounting location may be provided on a vessel of the liquid heating apparatus, for example on the dry side of a wall or floor of the vessel. If the vessel is of plastics an electrical conductor may be provided as the mounting location and may be applied to the plastics wall or floor. Alternatively, the mounting location may be associated with a heating element of the liquid heating apparatus. For example, in the case of a traditional immersed sheathed heating element, the mounting location may be provided on the dry side of the head of the heating element in the region of the hot return. The liquid heating apparatus may be of the type having a sheathed heating element provided on the underside of the base of the vessel of the apparatus, such as is described in WO 96/18331, for example. In this case, the mounting location may be provided on the underside of the base so as to be in thermal contact with the liquid in the vessel or the mounting location may be provided on the heating element, for example on a thermally conductive boss in direct thermal contact with the heating element. Preferably, however, the liquid heating apparatus comprises a thick film printed heating element preferably provided on the dry side of the base of the vessel. Such elements are well known in the art and are exemplified in WO 97/14269, WO 96/18331 and WO 96/17496.

Preferably, the mounting location is provided with an electrically and thermally conductive contact portion for receiving the thermistor thereon. The contact portion may be provided by a printed silver or the like pad, for example in the case of a mounting location on a heater, and this may extend to provide a further contact region for example for contact with a further electrical component as described above. Contact pads may easily be included in the manufacture of thick film printed heating elements by printing additional silver portions onto the insulator of the heater. Alternatively, the contact portions may be provided over the resistive heating track of the thick film printed heating element, preferably with an insulator such as an overglaze provided between the resistive track and the contact portion, so that the temperature of the track can more directly be monitored. Preferably, in this case, at least one electrically insulating layer is provided between the metal substrate of the thick film heater and the contact surface of the mounting location.

The mounting location may be attached to the heater of the liquid heating apparatus, to the vessel of the liquid heating apparatus or to a control of the liquid heating apparatus. In a preferred arrangement, the mounting location is provided on a carrier, which makes thermal contact with the region of the liquid heating apparatus the temperature of which is to be monitored. Thus, the thermistor is in direct thermal and electrical contact with the mounting location on the carrier and the carrier can be used to transfer both heat and electricity to the thermistor.

Advantageously, the carrier is arranged to receive the thermistor and thereby to prevent lateral movement thereof. For example, the carrier may be provided with walls or posts for engaging the periphery of the thermistor. Alternatively or additionally, the thermistor may be bonded to the carrier, for example by means of a thermally and electrically conductive material such as solder.

The carrier may be provided on the heater of the apparatus or on the vessel of the apparatus. In a preferred arrangement, however, the carrier is mechanically attached to the control of the apparatus. For example, the carrier may project from the control towards the heater in the assembled apparatus. Advantageously, the carrier may be resiliently biased against the heater, or another part of the apparatus the temperature of which is to be monitored. For example, the carrier may comprise resilient means such as a coil spring or preferably a leaf spring. The resilient means may be arranged to supply electricity to the mounting location of the carrier.

Biasing means may be provided to bias the thermistor against the mounting surface of the carrier. Advantageously, such biasing means may also act to bias the carrier against the region of the apparatus to be monitored. As described above, the biasing means may be arranged to make an electrical connection to the thermistor.

Viewed from a further aspect, the invention provides a control for a liquid heating apparatus comprising a control body, a carrier for a thermistor, a thermistor received in the carrier and in direct thermal and electrical contact with a mounting surface of the carrier and biasing means for resiliently biasing the carrier against a surface of the liquid heating apparatus the temperature of which is to be monitored.

According to this aspect of the invention, a particularly simple control utilising a thermistor is provided which when mounted in the liquid heating apparatus applies the carrier to the appropriate surface such that the thermistor can monitor the temperature of the surface.

It is not necessary for a direct circuit to be made between the thermistor and the control electronics for the heating apparatus. For example, the mounting location may be maintained at earth potential, so that only one connection is required between the thermistor and the control electronics, the circuit being completed via earth. Thus the mounting location may be provided by any earthed thermally and electrically conductive portion of the liquid heating apparatus, such as the wall or base of a metallic vessel or the metal substrate of a thick film heater.

However, if an earthed arrangement is not preferred, the mounting location may be provided for example on a locally insulated region of a metal substrate.

It will be seen from the above that the invention provides a convenient arrangement for a thermistor to be used in the monitoring of the operating temperature of a liquid heating apparatus.

An embodiment of the invention will be described in the following by way of example only and with reference to the accompanying drawings, in which:
Figure 1 is a partial sectional view of a thermistor arrangement according to the prior art;
Figure 2 is a perspective view of the thermistor of the arrangement of Figure 1;
Figure 3 is a partial sectional view of an embodiment of the present invention; and
Figure 4 is a perspective view of a further embodiment of the present invention.

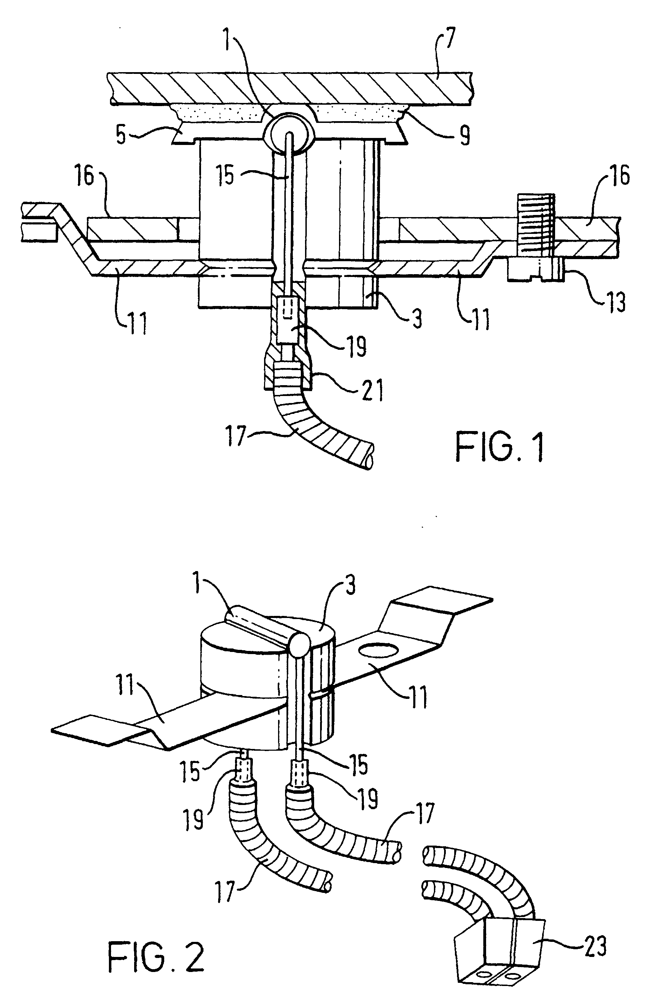

Figure 1 shows a partial sectional view of a thermistor arrangement according to the prior art which is described herein in order that some of the advantages of the present invention over prior arrangements may be more clearly understood. Figure 2 shows the thermistor and associated components in a perspective view. As shown in Figures 1 and 2, a type DO-41 thermistor 1 encased in glass is provided on a plastics former 3. The thermistor 1 is in thermal contact with a metallic member 5, which contact is aided by the application of thermal grease (not shown) to the interface between the thermistor 1 and the metallic member 5. The metallic member 5 conducts heat from the lower surface of a heater plate 7 to the thermistor 1. The conduction of heat from the heater plate 7 to the metallic member 5 is aided by an application of thermal grease 9 at their interface. The upper surface of the heater plate 7 contacts the liquid to be heated, and thus the heater plate 7 may form the base of a liquid heating vessel.

The plastics former 3 is held in position by two metal spring clips 11 which engage the former 3 and are attached by means of screws 13 to a sub-frame 16 held in fixed relation to the heater plate 7.

Electrical connection is made to the leads 15 of the thermistor 1 by wires 17 which are connected to the leads 15 by a crimped connection 19. An insulating sleeve 21 is provided around the crimped connection 19. The wires 17 terminate in an electrical connector 23 by means of which the thermistor 1 is brought into electrical connection with the control circuitry (not shown) for the liquid heating apparatus.

As can be seen from the above description, this known arrangement for sensing the temperature of the heater plate 7 is complex in construction, requiring a large number of separate parts. Thus, the arrangement must be constructed in a number of distinct, time-consuming steps.

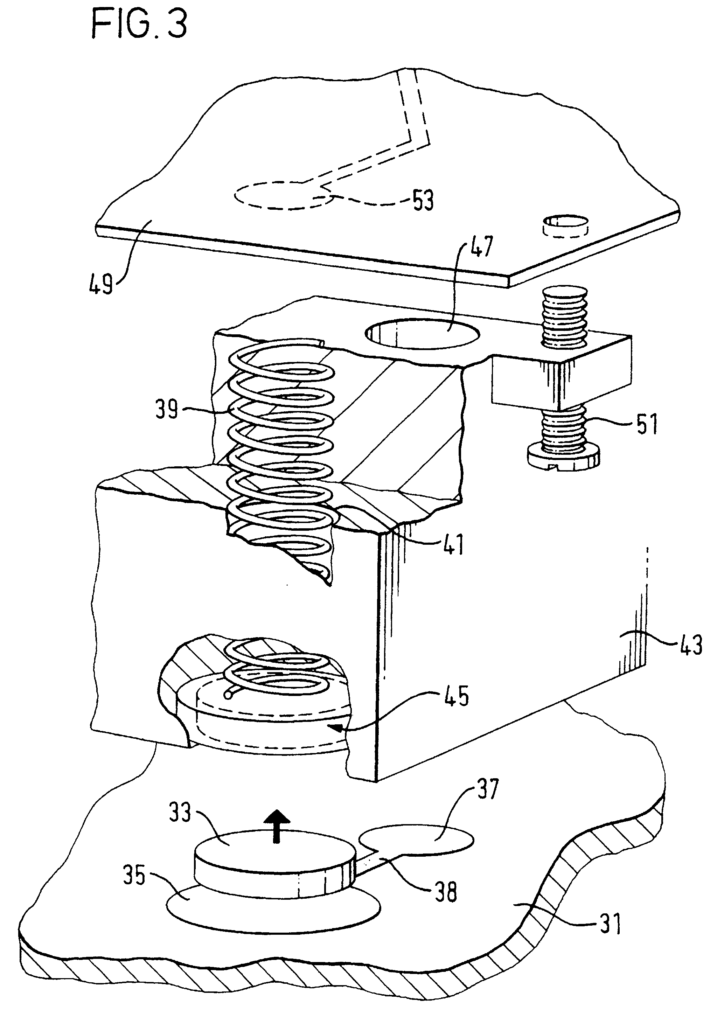

Figure 3 shows a partial sectional view of an embodiment of the present invention. According to this embodiment, a liquid heating apparatus comprises a heater 31 onto which is mounted a pill-type thermistor 33. The heater is a thick film resistive heater comprising an insulating layer provided on a metallic substrate onto which insulating layer is applied a thick film heating element in the form of a resistive heating track. Such heaters are described for example in WO 97/14269, WO 96/18331 and WO 96/17496. The surface of the heater 31 which is uppermost in Figure 3 is that surface provided with the insulating layer and the resistive heating track, and thus the liquid heating apparatus is shown upside down in Figure 3 relative to its position of use.

The thermistor 33 is a pill-type thermistor such as are available from Bowthorpe Thermometrics of Taunton, England and Anglia of Wisbech, England. The thermistor 33 is in the form of a substantially flat disc of material, such as D13.8 material, having a resistance that is dependent on the temperature of the material. The upper and lower surfaces of the disc are metallised so that electrical contact can be made thereto. Typical nominal resistance ranges for such thermistors are 380 kΩ at 0°C to 5 kΩ at 100°C or 734 kΩ at 0°C to 3 kΩ at 120°C and the thermistors typically have a diameter of 2 to 5mm.

The lower surface of the thermistor 33 is in electrical and thermal contact with a thermistor contact pad 35 of silver printed on the heater 31. The thermistor contact pad 35 may be printed during the manufacture of the heater 31 at the same time as other printed silver features are added to the heater 31 and thus does not require an additional processing step during heater manufacture. A further silver contact pad 37 is also provided on the heater 31 and is in contact with the thermistor contact pad 35 via a printed silver track 38. This further contact pad 37 provides a location to which electrical contact can be made and which is in electrical contact with the thermistor 33.

The upper surface of the thermistor 33 is contacted by a metal coil spring 39 which not only acts to urge the thermistor 33 against the contact pad 35 on the heater to ensure good thermal contact with the heater, but also make electrical contact with the upper metallised surface of the thermistor 33. The spring 39 is received in a guide bore 41 formed in an insulating block 43. At the lower end of the guide bore 41, a cavity 45 is formed to receive the thermistor 33 and thereby to prevent lateral movement thereof when the liquid heating apparatus is assembled. A second guide bore 47 is also formed in the block 43 and receives a second spring (not shown) which makes electrical contact with the further contact pad 37.

The block 43 is connected to the heater by means not shown in Figure 3 and is also connected, by means of screws 51 to a printed circuit board (PCB) 49 on which are provided the control electronics for the heater 31. Thus the springs received in the guide bores 41, 47 are sandwiched between the heater 31 and the PCB 49. In this way the spring 39 urges the thermistor 33 into thermal and electrical contact with the contact pad 35. A spring contact pad 53 is provided on the underside of the PCB 49 and is contacted by the upper end of the spring 39. A similar contact pad (not shown) is also provided on the underside of the PCB 49 for contacting the spring received in the other guide bore 47. The contact pads on the underside of the PCB 49 are connected to the control electronics for the heater 31.

Thus, it will be seen that in the assembled state of the apparatus the thermistor 33 is connected in a series circuit between the two contact pads on the underside of the PCB 49, the circuit running from contact pad 53 through spring 39 to the thermistor 33, through contact pads 35, 37 to the other spring and via that spring to the other contact pad on the underside of the PCB 49. It will be appreciated therefore that the skilled person will easily be able to utilise the arrangement of the invention in suitable control electronics for the heater 31.

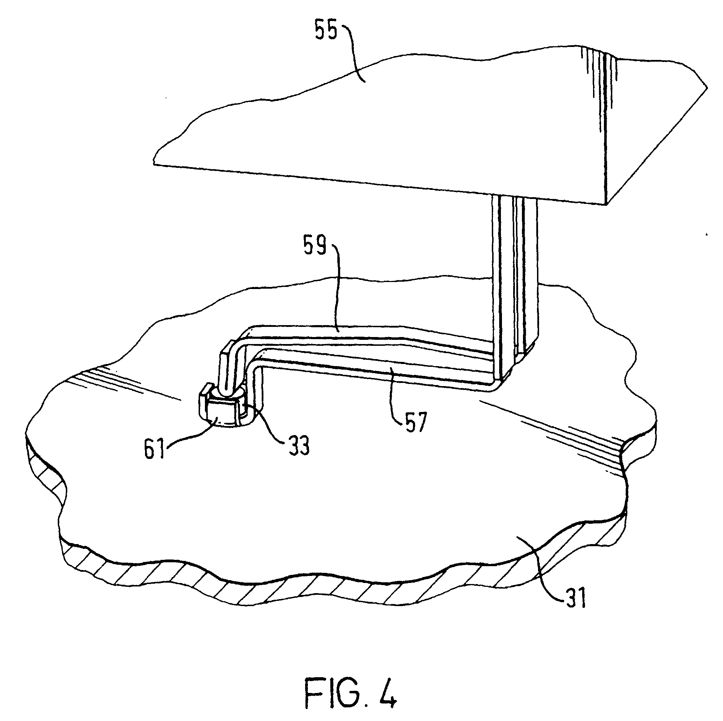

Figure 4 shows a further embodiment of the invention. Corresponding reference numerals are used in the description of this embodiment for those parts that have already been described in relation to Figure 3, and these parts will not be described again in detail except where they differ to the embodiment of Figure 3.

Referring to Figure 4, a control body 55, which contains suitable electronics for controlling the liquid heating apparatus, is provided with two leaf springs 57,59. At their upper ends the leaf springs 57,59 are electrically connected to the control circuitry (not shown) of the control body 55. At its distal end, the first leaf spring 57 is provided with a carrier 61 which is formed from the folded spring metal and receives the thermistor 33. The lower surface of the thermistor 33 is in thermal and electrical contact with the upwardly-facing internal surface of the carrier 61. The thermistor 33 is biased into position in the carrier 33 by the second leaf spring 59. The distal end of the second leaf spring 57 also makes electrical contact with the upper surface of the thermistor 33. Thus, an electrical path is provided from the control body 55, through the first leaf spring 57, via the carrier 57 to the thermistor 33 and from the thermistor 33 through the second leaf spring 59 back to the control body 55.

The leaf springs 57,59 bias the lower surface of the carrier 61 into thermal contact with the heater 31, such that the thermistor can sense the temperature of the heater by means of heat transferred through the carrier 61. Thermal grease may be applied between the carrier and the heater to ensure effective thermal transfer.

The carrier may be positioned on any desired part of the heater. For example it may be positioned over or adjacent the heater tracks of a thick film heater, to allow the thermistor possibly to sense an overheat condition. Alternatively, it may be positioned away from the heater tracks so as to allow the thermistor more closely to monitor the temperature of liquid inside a vessel.

It will be appreciated that in the arrangement shown in Figure 4 the thermistor 33 is attached to the control body 55 and can be mounted to and from the heater 31 in a simple manner.

It will be seen chat the arrangements according to the invention described with reference to Figures 3 and 4 are significantly simpler in design than the known arrangement described in relation to Figures 1 and 2. Furthermore, the thermal lag associated with the glass encased thermistor of Figures 1 and 2 is prevented so that the arrangements of Figures 3 and 4 are more rapidly responsive to changes in temperature. Moreover, the thermistor arrangements of Figure 3 and 4 provide better thermal contact between the thermistor and the heater, further improving the response of the arrangement. Finally, the mounting arrangements of the invention involve considerably fewer components than the prior art, reducing manufacturing and assembly costs.

## Claims

1. Electrical liquid heating apparatus comprising a thermistor (33) for monitoring a temperature of the liquid heating apparatus, wherein the thermistor is mounted against and in direct thermal and electrical contact with a mounting location (35) on a heated portion of the apparatus.

2. Electrical liquid heating apparatus as claimed in claim 1, wherein the mounting location (35) is provided on a heater (31) of said apparatus.

3. Electrical liquid heating apparatus as claimed in claim 1 or 2, wherein said thermistor (33) is resiliently biased against said mounting location (35) by biasing means (39;59).

4. Electrical liquid heating apparatus as claimed in claim 3, wherein said biasing means (39;59) is electrically conductive and makes electrical contact with said thermistor (33).

5. Electrical liquid heating apparatus as claimed in any preceding claim further comprising electrical circuitry connected electrically to said thermistor (33), said circuitry being mounted on a support (49) with said thermistor (33) being arranged between the support and the mounting location (35).

6. Electrical liquid heating apparatus as claimed in claims 4 and 5, wherein said biasing means (39) is also arranged between the support (49) and the mounting location (35),

7. Electrical liquid heating apparatus as claimed in claim 6 wherein the support (49) has an electrical contact location (53) for engagement with the biasing means (39).

8. Electrical liquid heating apparatus as claimed in any of claims 5 to 7, wherein said thermistor (33) or said thermistor and said biasing means (39) are arranged in a guide bore (41) provided in an intermediate member (43) arranged between the support (49) and the mounting location (35).

9. Electrical liquid heating apparatus as claimed in claim 8, wherein said support (49) has a further electrical contact location for engagement with a resilient electrical contact extending in a further guide bore (47) provided in said intermediate member (43), for engagement with a further contact (37) provided on the apparatus which is electrically connected to the mounting locatio (35) for the thermistor (33).

10. Electrical liquid heating apparatus as claimed in any of claims 1 to 7, wherein said mounting location is provided in a carrier (61) which is in thermal contact with the region of the liquid heating apparatus the temperature of which is to be monitored.

11. Electrical liquid heating apparatus as claimed in claim 10, wherein the carrier (61) is mechanically attached to a control (55) of the apparatus.

12. Electrical liquid heating apparatus as claimed in claim 10 or 11, wherein the carrier (61) is resiliently biased by resilient means (57) against the region of the liquid heating apparatus the temperature of which is to be monitored.

13. Electrical liquid heating apparatus as claimed in claim 12, wherein the resilient means (57) is arranged to conduct electricity to the thermistor (33).

14. Electrical liquid heating apparatus as claimed in any of claims 4 to 13, wherein the surface of said thermistor (33) in contact with said biasing means (39;59) is metallised.

15. Electrical liquid heating apparatus as claimed in any preceding claim, wherein said mounting location (35) is substantially planar and said thermistor (33) has a substantially flat mounting face, said mounting face being mounted against said mounting location.

16. Electrical liquid heating apparatus as claimed in claim 15, wherein said thermistor (33) has a face opposed to said mounting face and substantially parallel therewith.

17. Electrical liquid heating apparatus as claimed in any precoding claim, wherein the surface of said thermistor (33) in contact with said mounting location (35) is metallised.

18. Electrical liquid heating apparatus as claimed in any preceding claim, wherein said heating apparatus comprises a thick film resistive heating element.

19. Electrical liquid heating apparatus as claimed in any preceding claim, wherein said mounting location is provided with an electrically and thermally conductive contact portion (35) for receiving said thermistor (33) thereon.

20. Electrical liquid heating apparatus as claimed in claim 19, wherein said contact portion is provided by a silver pad (35) applied to the mounting location.

21. Electrical liquid heating apparatus as claimed in claim 20, wherein said pad (35) extends to provide a further contact region (37).

22. Electrical liquid heating apparatus as claimed in any preceding claim, wherein said mounting location is at earth potential.

23. A control for a liquid heating apparatus comprising a control body (35), a carrier (61) for a thermistor, a thermistor (33) received in the carrier and in direct thermal and electrical contact with a mounting surface of the carrier and biasing means (57) for resiliently biasing the carrier against a surface (31) of the liquid heating apparatus the temperature of which is to be monitored.

24. A control as claimed in claim 23, wherein the biasing means (57) provides an electrical connection between the carrier and the control body.

25. A control as claimed in claim 23 or 24, wherein resilient means (59) are provided for resiliently biasing the thermistor (33) against the mounting location on the carrier (61).

26. A control as claimed in claim 25 wherein the resilient means (59) provides an electrical connection between the thermistor (33) and the control body (55).

27. A control as claimed in claim 25 or 26, wherein the resilient means (59) biases the carrier (61) against said surface (31) of the liquid heating apparatus.

28. A control as claimed in any of claims 25 to 27, wherein the resilient means (59) comprises a leaf spring.

29. A control as claimed in any of claims 23 to 28, wherein the carrier (61) is provided with means for preventing lateral movement of the thermistor (33).

30. A control as claimed in any of claims 23 to 29, wherein the biasing means (57) comprises a leaf spring.

## Patentansprüche

1. Elektrische Flüssigkeitsheizvorrichtung, mit einem Heißleiter (33) zum Überwachen einer Temperatur der Flüssigkeitsheizvorrichtung, wobei der Heißleiter an und in direktem thermischen und elektrischen Kontakt mit einem Montageort (35) auf einem beheizten Abschnitt der Vorrichtung montiert ist.

2. Elektrische Flüssigkeitsheizvorrichtung nach Anspruch 1, bei der der Montageort (35) auf einer Heizeinrichtung (31) der Vorrichtung vorgesehen ist.

3. Elektrische Flüssigkeitsheizvorrichtung nach einem der Ansprüche 1 oder 2, bei der der Heißleiter (33) mittels eines Vorbelastungsmittels (39; 59) elastisch gegen den Montageort (35) vorbelastet ist

4. Elektrische Flüssigkeitsheizvorrichtung nach Anspruch 3, bei der das Vorbelastungsmittel (39; 59) elektrisch leitend ist und einen elektrischen Kontakt mit dem Heißleiter (33) herstellt.

5. Elektrische Flüssigkeitshelzvorrichtung nach irgendeinem der vorangehenden Ansprüche, die ferner eine elektrische Schaltung umfaßt, die mit dem Heißleiter (33) elektrisch verbunden ist und auf einem Träger (49) montiert ist, wobei der Heißleiter (33) zwischen dem Träger und dem Montageort (35) angeordnet ist.

6. Elektrische Flüssigkeitsheizvorrichtung nach einem der Anspr0che 4 und 5, bei der das Vorbelastungsmittel (39) ebenfalls zwischen dem Träger (49) und dem Montageort (35) angeordnet ist.

7. Elektrische Flüssigkeitsheizvorrichtung nach Anspruch 6, bei der der Träger (49) einen elektrischen Kontaktort (53) für den Eingriff mit dem Vorbelastungsmittel (39) aufweist.

8. Elektrische Flüssigkeitsheizvorrichtung nach irgendelnem der Ansprüche 5 bis 7. bei der der Helßleiter (33) oder der Heißleiter und das Vorbelastungsmittel (39) in einer Führungsbohrung (41) angeordnet sind, die in einem Zwischenelement (43) vorgesehen ist, das zwischen dem Träger (49) und dem Montageort (35) angeordnet ist.

9. Elektrische Flüssigkeitsheizvorrichtung nach Anspruch 8, bei der der Träger (49) einen welteren elektrischen Kontaktort für den Eingriff mit einem elastischen elektrischen Kontakt aufweist, der sich in einer weiteren Führungsbohrung (47) erstreckt, die In dem Zwischenelement (43) vorgesehen ist, für den Eingriff mit dem weiteren Kontakt (37), der an der Varrichtung vorgesehen ist und mit dem Montageort (35) für den Heißleiter (33) elektrisch verbunden ist.

10. Elektrische Flüssigkeitsheizvorrichtung nach irgendeinem der Ansprüche 1 bis 7, bei der der Montageort in einem Träger (61) vorgesehen ist, der in thermischern Kontakt mit dem Bereich der Flüssigkeitsheizvorrichtung steht, dessen Temperatur überwacht werden soll.

11. Elektrische Flüssigkeitshelzvorrichtung nach Anspruch 10, bei der der Träger (61) mechanisch an einer Steuervorrichtung (55) der Vorrichtung befestigt ist.

12. Elektrische Flüssigkeitsheizvorrichtung nach einem der Ansprüche 10 oder 11, bei der der Träger (61) mittels des elastischen Mittels (57) gegen den Bereich der Flüssigkeitsheizvorrichtung, dessen Temperatur überwacht werden soll, elastisch vorbelastet ist.

13. Elektrische Flüssigkeitsheizvorrichtung nach Anspruch 12, bei der das elastische Mittel (57) so angeordnet ist, daß es Strom zum Heißleiter (33) leitet.

14. Elektrische Flüssigkeitsheizvorrichtung nach irgendeinem der Ansprüche 4 bis 13, bel der die Oberfläche des Heißleiters (33), die mit dem Vorbelastungsmittel (39; 59) in Kontakt ist, metallisiert ist.

15. Elektrische Flüssigkeitsheizvorrichtung nach irgendeinem der vorangehenden Ansprüche, bei der der Montageort (35) im wesentlichen flach ist und der Heißleiter (33) eine im wesentlichen flache Montagefläche aufweist, wobei die Montagefläche gegen den Montageort montiert wird.

16. Elektrische Flüssigkeitsheizvorrichtung nach Anspruch 15, bei der der Heißleiter (33) eine Fläche aufweist, die der Montagefläche gegenüberliegt und im wesentlichen parallel zu dieser ist

17. Elektrische Flüssigkeitsheizvorrichtung nach irgendeinem der vorangehenden Ansprüche, bei der die Oberfläche des Heißleiters (33), die mit dem Montageort (35) in Kontakt steht, metallisiert ist.

18. Elektrische Flüssigkeitsheizvorrichtung nach irgendeinem der vorangehenden Ansprüche, bei der die Heizvorrichtung ein Dickschicht-Widerstandsheizelement umfaßt.

19. Elektrische Flüssigkeitsheizvorrichtung nach irgendeinem der vorangehenden Ansprüche, bei der der Montageort mit einem elektrisch und thermisch leitenden Kontaktabschnitt (35) zum Aufnehmen des Heißleiters (33) versehen ist

20. Elektrische Flüsslgkeitsheizvorrichtung nach Anspruch 19, bei der der Kontaktabschnitt mit einer Silberauflage (35) versehen ist, die auf den Montageort aufgebracht ist.

21. Elektrische Flüssigkeitsheizvorrichtung nach Anspruch 20, bei der die Auflage (35) sich so erstreckt, daß sie einen weiteren Kontaktbereich (37) bereitstellt.

22. Elektrische Flüssigkeitsheizvorrichtung nach irgendeinem der vorangehenden Ansprüche, bei der der Montageort auf Massepotential liegt.

23. Steuervorrichtung für eine Flüssigkeitsheizvorrichtung, mit einem Steuervorrichtungskörper (55), einem Träger (61) für einen Heißleiter, einem Heißleiter (33), der im Träger aufgenommen Ist und in direktem thermischen und elektrischen Kontakt mit einer Montageoberfläche des Trägers ist, und einem Vorbelastungsmittel (57) zum elastischen Vorbelasten des Trägers gegen die Oberfläche (31) der Flüsslgkeitsheizvorrichtung, deren Temperatur überwacht werden soll.

24. Steuervorrichtung nach Anspruch 23, bei der das Vorbelastungsmittel (37) eine elektrische Verbindung zwischen dem Träger und dem Steuervorrichtungskörper bereitstellt.

25. Steuervorrichtung nach Anspruch 23 oder Anspruch 24, bei der das elastische Mittel (59) vorgesehen ist, um den Heißleiter (33) elastisch gegen den Montageort des Trägers (61) vorzubelasten.

26. Steuervorrichtung nach Anspruch 25, bei der das elastische Mittel (59) eine elektrische Verbindung zwischen dem Heißleiter (33) und dem Steuervorrichtungskörper (55) bereitstellt.

27. Steuervorrichtung nach einem der Ansprüche 25 oder 26, bei der das elastische Mittel (59) den Träger (61) gegen die Oberfläche (31) der Flüssigkeitsheizvorrichtung vorbelastet.

28. Steuervorrichtung nach irgendeinem der Ansprüche 25 bis 27, bei der das elastische Mittel (59) eine Blattfeder umfaßt.

29. Steuervorrichtung nach irgendeinem der Ansprüche 23 bis 28, bei der der Träger (61) mit einem Mittel zum Verhindern einer lateralen Bewegung des Heißleiters (33) versehen ist.

30. Steuervorrichtung nach irgendeinem der Ansprüche 23 bis 29, bei der das Vorbelastungsmittel (57) eine Blattfeder umfaßt.

## Revendications

1. Appareil de chauffage de liquides électrique comprenant une thermistance (33) pour surveiller une température de l'appareil de chauffage de liquides, dans lequel la thermistance est montée contre et en contact direct thermique et électrique avec un emplacement de montage (35) sur une partie chauffée de l'appareil.

2. Appareil de chauffage de liquides électrique selon la revendication 1, dans lequel l'emplacement de montage (35) est fourni sur un dispositif de chauffage (31) dudit appareil.

3. Appareil de chauffage de liquides électrique selon l'une quelconque des revendications 1 ou 2, dans lequel ladite thermistance (33) est chargée de manière élastique contre ledit emplacement de montage (35) par des moyens de charge (39 ; 59).

4. Appareil de chauffage de liquides électrique selon la revendication 3, dans lequel lesdits moyens de charge (39 ; 59) sont conducteurs électriquement et établissent un contact électrique avec ladite thermistance (33).

5. Appareil de chauffage de liquides électrique selon l'une quelconque des revendications précédentes, comprenant de plus des circuits électriques connectés électriquement à ladite thermistance (33), lesdits circuits étant montés sur un support (49), ladite thermistance (33) étant disposée entre le support et l'emplacement de montage (35).

6. Appareil de chauffage de liquides électrique selon l'une quelconque des revendications 4 et 5, dans lequel lesdits moyens de charge (39) sont également disposés entre le support (49) et l'emplacement de montage (35).

7. Appareil de chauffage de liquides électrique selon la revendication 6, dans lequel le support (49) possède un emplacement de contact électrique (53) pour une mise en prise avec les moyens de charge (39).

8. Appareil de chauffage de liquides électrique selon l'une quelconque des revendications 5 à 7, dans lequel ladite thermistance (33) ou ladite thermistance et lesdits moyens de charge (39) sont disposés dans un alésage de guidage (41) fourni dans un élément intermédiaire (43) disposé entre le support (49) et l'emplacement de montage (35).

9. Appareil de chauffage de liquides électrique selon la revendication 8, dans lequel ledit support (49) possède un autre emplacement de contact électrique pour une mise en prise avec un contact électrique élastique s'étendant dans un autre alésage de guidage (47) fourni dans ledit élément intermédiaire (43) pour une mise en prise avec un autre contact (37) fourni sur l'appareil, qui est connecté électriquement à l'emplacement de montage (35) de la thermistance (33).

10. Appareil de chauffage de liquides électrique selon l'une quelconque des revendications 1 à 7, dans lequel ledit emplacement de montage est fourni dans un dispositif porteur (61) qui est en contact thermique avec la région de l'appareil de chauffage de liquides dont la température doit être surveillée.

11. Appareil de chauffage de liquides électrique selon la revendication 10, dans lequel le dispositif porteur (61) est attaché mécaniquement à une commande (55) de l'appareil.

12. Appareil de chauffage de liquides électrique selon l'une quelconque des revendications 10 ou 11, dans lequel le dispositif porteur (61) est chargé de manière élastique par des moyens élastiques (57) contre la région de l'appareil de chauffage de liquides dont la température doit être surveillée.

13. Appareil de chauffage de liquides électrique selon la revendication 12, dans lequel les moyens élastiques (57) sont disposés pour conduire l'électricité à la thermistance (33).

14. Appareil de chauffage de liquides électrique selon l'une quelconque des revendications 4 à 13, dans lequel la surface de ladite thermistance (33) en contact avec lesdits moyens de charge (39 ; 59), est métallisée.

15. Appareil de chauffage de liquides électrique selon l'une quelconque des revendications précédentes, dans lequel ledit emplacement de montage (35) est sensiblement plan et ladite thermistance (33) possède une face de montage sensiblement plate, ladite face de montage étant montée contre ledit emplacement de montage.

16. Appareil de chauffage de liquides électrique selon la revendication 15, dans lequel ladite thermistance (33) possède une face opposée à ladite face de montage et sensiblement parallèle à celle-ci.

17. Appareil de chauffage de liquides électrique selon l'une quelconque des revendications précédentes, dans lequel la surface de ladite thermistance (33) en contact avec ledit emplacement de montage (35), est métallisée.

18. Appareil de chauffage de liquides électrique selon l'une quelconque des revendications précédentes, dans lequel ledit appareil de chauffage comprend un élément de chauffage résistif à couche épaisse.

19. Appareil de chauffage de liquides électrique selon l'une quelconque des revendications précédentes, dans lequel ledit emplacement de montage est fourni avec une partie de contact conductrice électriquement et thermiquement (35) pour y recevoir ladite thermistance (33).

20. Appareil de chauffage de liquides électrique selon la revendication 19, dans lequel ladite partie de contact est fournie par une plaque argentée (35) appliquée à l'emplacement de montage.

21. Appareil de chauffage de liquides électrique selon la revendication 20, dans lequel ladite plaque (35) s'éland pour fournir une autre région de contact (37).

22. Appareil de chauffage de liquidas électrique selon l'une quelconque des revendications précédentes, dans lequel ledit emplacement de montage est au potentiel de la terre.

23. Commande d'appareil de chauffage de liquides comprenant un corps de commande (35), un dispositif porteur (61) de thermistance, une thermistance (33) reçue dans le dispositif porteur et en contact direct thermique et électrique avec une surface de montage du dispositif porteur et des moyens de charge (57) pour charger de manière élastique le dispositif porteur contre une surface (31) de l'appareillage de chauffage de liquides dont la température doit être surveillée.

24. Commande selon la revendication 23, dans laquelle les moyens de charge (57) fournissent une connexion électrique entre le dispositif porteur et le corps de commande.

25. Commande selon l'une quelconque des revendications 23 ou 24, dans laquelle des moyens élastiques (59) sont fournis pour charger de manière élastique la thermistance (33) contre l'emplacement de montage sur le dispositif porteur (61).

26. Commande selon la revendication 25, dans laquelle les moyens élastiques (59) fournissent une connexion électrique entre la thermistance (33) et le corps de commande (55).

27. Commande selon l'une quelconque des revendications 25 ou 26, dans laquelle les moyens élastiques (59) chargent le dispositif porteur (61) contre ladite surface (31) de l'appareil de chauffage de liquides.

28. Commande selon l'une quelconque des revendications 25 à 27, dans laquelle les moyens élastiques (59) comprennent un ressort à lames.

29. Commande selon l'une quelconque des revendications 23 à 28, dans laquelle le dispositif porteur (61) est fourni avec des moyens pour empêcher un mouvement latéral de la thermistance (33).

30. Commands selon l'une quelconque des revendications 23 à 29, dans laquelle les moyens de charge (57) comprennent un ressort à lames.
